# EUROPEAN PATENT APPLICATION

(11) **EP 3 373 229 A1**
(43) Date of publication of application: **12.09.2018**
(21) Application number: 17159387.4
(22) Date of filing: 06.03.2017
(51) Int. Cl.: G06Q 40/00, G06K 9/00

(54) **METHOD AND COMPUTER PROGRAM FOR DETERMINING RECORD INFORMATION**

(71) Applicant: Xpenditure NV, 2800 Mechelen (BE)
(72) Inventor: Weyts, Gunther, 9820 Merelbeke (BE); Derkinderen, Wim, 3140 Keerbergen (BE)
(74) Representative: Deloitte

(57) **Abstract**

A computer-implemented method for determining record information, the method being implemented by at least one means for processing data and at least one data resource, wherein the at least one data resource comprises at least one data resource item and at least one predetermined preliminary region of interest (ROI), comprising the steps of receiving a record by the at least one means for processing data, wherein the record comprises at least one structured information item; searching at least one record identifier in the at least one predetermined preliminary ROI of the record; and determining at least one ROI in the record based on the at least one predetermined preliminary ROI where the at least one record identifier is found;

## Description

### Field of the invention

The present invention relates to a computer-implemented method, computer program and use of a device for processing records, in particular for determining record information.

### Background of the invention

Currently, accounting for business expenditures is a painstaking and time-consuming activity. The receipts relating to an expenditure are manually collected, itemized, and entered into a form. The receipt is then manually reconciled, for example, with any credit card information available from a credit card service that processed a credit card used in the making the expenditure. If a person made the expenditure with a personal credit card, then a credit card statement for the expenditure has to be collected from the person using the credit card. If the person made the expenditure with cash, then there is no credit card data with which to reconcile the receipt. Not only do the above activities take time, but they also delay reimbursement to the person making the expenditure. Additionally, receipts from purchase transactions come in various sizes and formats. Because of these different sizes and formats, submitting these receipts to an OCR engine for data capture may not always yield accurate data. When the captured data is presented to a user for verification, the user has to take additional time to correct incorrect or missing data.

Therefore there is a need for novel methods and systems for processing records.

### Summary of the invention

It is an object of embodiments of the present invention to provide novel and improved methods and systems for processing records.

It is an object of the embodiments of the present invention to provide at least one embodiment of a system and/or method to process a record from a user in a performant and efficient way, and linking the determined information items from the record to user-specific information.

The above objective is accomplished by a method and device according to the present invention.

In a first aspect the present invention provides computer-implemented methods for determining record information, the method being implemented by at least one means for processing data and at least one data resource, wherein the at least one data resource comprises at least one data resource item and at least one predetermined preliminary region of interest (ROI), comprising the steps of
- receiving a record by the at least one means for processing data, wherein the record comprises at least one structured information item;
- searching at least one record identifier in the at least one predetermined preliminary ROI of the record;
- determining at least one, e.g. relevant, ROI in the record based on the at least one predetermined preliminary ROI where the at least one record identifier is found;

Embodiments of the present invention allow to analyze a record and to determine record information in an efficient way since there is less need to parse through, identify and/or compare each individual structured information item in the record with data values stored in a data resource, for example a database. Hence, determining and using ROIs to determine record information may have a positive impact on processing time and required memory. The determination and use of ROIs does not require the use of a template comprising a predefined (fixed) structure. Hence, there is no specific need to identify the owner of the record and/or its author in order to able to execute the aforementioned method. This allows an improvement in the efficiency of the means for processing data.

In embodiments searching the at least one record identifier in the at least one predetermined preliminary ROI of the record comprises:
- comparing the at least one structured information item in a first predetermined preliminary ROI and at least one data resource item and based on said comparison determine if at least one structured information is a record identifier and
- if no record identifier is found in the first predetermined preliminary ROI, compare the at least one structured information item in a second or consecutive predetermined preliminary ROIs until at least one record identifier is found.

In embodiments comparing the at least one structured information item with at least one data resource item may comprise mapping the at least one structure information item.

In embodiments reference to a record identifier may be reference to a data resource item which has a similar value as the structured information item and which may help to identify the record producer (e.g. merchant) and/or record owner.

In embodiments the at least one record identifier, may be a unique item/match to identify the record producer or classify a record, e.g. an enterprise number. In further embodiments the at least one record identifier may be a combination of a unique record identifiers, or a first record identifier and at least one second record identifier.

In embodiments, the at least one determined ROI is the same or smaller in size than the predetermined ROI where the at least one record identifier is identified and/or found.

In embodiments, the record identifier comprises at least one data resource item. For example, a street name and number. The at least one data resource item can be a plurality of data resource items which can be dependent or independent of each other.

In embodiments, the second predetermined ROI can be an extension of the first predetermined ROI or a predetermined ROI in a different location than the first predetermined ROI.

In embodiments of the present invention, the method further comprises a step of utilizing the at least one ROI to associate at least a part of the plurality of structured information items with a resource of the user, for example a financial account of the user, based at least in part on the classification for the record.

It is an advantage of embodiments of the present invention that optimization of required storage volumes or spaces, processing time and/or data transferring time is enabled since not all the structured information items in the record may have to be linked to a resource of the user. Indeed, the determination of at least one ROI according to a preferred embodiment of the invention may allow to determine only user-dependent information items from the record, for example, in case where the record is a receipt, common purchased items or used payment method. Structured information items like the VAT number of the merchant are classified as user-independent structured information items. Hence, the determination of ROIs may allow to make a distinction between user-independent and user-dependent structured information items.

In embodiments the at least one predetermined preliminary ROI is selected from the group consisting of, but not limited to, a user-defined preliminary ROI, a record-based stored ROI (e.g. resulting from a previous classification generating a ROI), a random-based preliminary ROI, a predefined e.g. arbitrary ROI or a system-based ROI. Thus in some embodiments selection at least on predetermined preliminary ROI may comprise an additional step of providing said preliminary ROI, like e.g. a user-defined ROI.

In preferred embodiments system-based may refers to e.g. depending on the available CPUs, number of records that should be processed, etc., hence, system based is not the same as random-based.

In embodiments the method may further comprise a step of utilizing the at least one ROI in the record to determine and communicate at least a part of the plurality of structured information items to an interface, wherein said interface is connected to the at least one means for processing data.

In embodiments of the present invention the at least one record identifier is a unique first record identifier which uniquely identifies a producer of the record, or an owner of the record or a classification of the record. In preferred embodiments classification of the record may be e.g. parking ticket or flight ticket.

Determining at least one ROI in the record may allow to analyze the record and to determine a record classification in an efficient way since there is less need to compare each individual structured information item in the record with data values stored in at least one data resource, for example a database. The selection of a structured information item in at least one ROI in the record and its comparison with at least one first record identifier from at least one data resource, for example a database, allows to select e.g. secondary data items from the same or another data resource, for example a database, which may be identified in the record to statistically determine at least one ROI on the record

In embodiments of the present invention the at least one ROI may statistically be determined in the record. Based on a value of a correlation factor, determined on the basis of the match between the selected secondary items (if information item is not unique) and the information items in the record. Information items located inside the ROI may be defined as identifiers if they are linked to the author/producer of the record. Hence, determining and using ROIs to determine record information may have a positive impact on processing time and required memory from the at least one means for processing data.

In embodiments the at least one record identifier comprises a first record identifier and at least one second record identifier, wherein the at least one second record identifier is uniquely assigned to the first record identifier.

In embodiments, the step of determining at least one predetermined preliminary ROI in the record is selected from the group consisting of the steps of utilizing a stored ROI for a specific type of record, utilizing a predefined ROI, or utilizing a user-defined ROI, wherein the user-defined ROI is based on information provided by the user. The step of utilizing a stored ROI allows to improve the efficiency of the system comprising the at least one means for processing, in relation with the amount of processed records. Indeed, the stored ROI for a specific record may be replaced by a more recent, improved determined ROI, hence, reducing the processing time to execute the method when analyzing a similar record later on.

In embodiments the computer-implemented method for determining record information according to the present invention further comprises a step of determining at least one third record identifier assigned to the at least one second record identifier to perform a pre-processing step to determine the accuracy of the at least one structured information item in the record. Advantageously this enables one to correct for errors caused by means for character recognition. In embodiments the third record identifier may be the same as the second record identifier?

According to a preferred embodiment of the invention, the method further comprises a step to store the at least one obtained ROI in the record in the at least one data resource. This stored ROI may then be applied or used as at least one predetermined ROI in a next processing step.

In embodiments the computer-implemented method for determining record information according to the present invention, further comprises a step of determining a classification for the record based on the determined at least one ROI.

In embodiments the computer-implemented method for determining record information according to the present invention, further comprises a step of utilizing the at least one ROI in the record to associate at least a part of the at least one structured information items with a resource of the producer of the record and/or the owner of the record. In embodiments, the at least one ROI in the record includes one or more identifiers or information items linked to, but not limited to, merchant, company, retailer, vendor, user, party, originator and/or payer data or payment data

In embodiments a classification for the record based on the at least one ROI comprises an identification of the record as financial transaction and/or a determination of the author of the record.

In embodiments the computer-implemented method for determining record information according to the present invention, further comprises a step of utilizing the at least one ROI in the record to determine and communicate at least a part of the plurality of structured information items and/or at least one record identifier to an interface, wherein said interface is connected to the at least one means for processing data. According to another aspect of the invention, a computer program product is provided for, if implemented on at least one means for processing, performing the computer-implemented method for determining record information comprising the steps of receiving a record by the at least one means for processing data, wherein said record comprises a plurality of structured information items, determining at least one region of interest (ROI) in the record utilizing at least a part of the plurality of structured information items and at least one data resource, said data resource comprising at least one data feed defining at least one identifier, wherein said at least one primary item is uniquely defined by at least one secondary item, and determining a classification for the record based on the at least one ROI in the record

In embodiments the computer program product further comprises a step of utilizing the at least one ROI to associate at least a part of the plurality of structured information items with a resource of the user, preferably a financial account of the user, based at least in part on the classification for the record. This allows to optimize required storage volumes or spaces, processing time and/or data transferring time since not all the structured information items in the record may have to be linked to a resource of the user. Indeed, the determination of at least one ROI according to a preferred embodiment of the invention may allow to determine only user-dependent information items from the record, for example, in case where the record is a receipt, purchased items or used payment method. Structured information items like the VAT number of the merchant are classified as user-independent structured information items. Hence, the determination of ROIs may allow to make a distinction between user-independent and user-dependent structured information items.

In embodiments the step of searching at least one record identifier based on a comparison between the at least one structured information in the at least one predetermined preliminary ROI and the at least one data resource item, further may comprise the steps of
- selecting a first structured information item in the at least one predetermined preliminary ROI;
- determining at least one first record identifier based on the comparison between the first structured information item with the at least one data resource item, wherein the value of the at least one first record identifier corresponds with the value of the at least one data resource item;
determining at least one second record identifier assigned to the at least one first record identifier if the first identifier is not unique; In embodiments the computer-implemented method for determining record information according to the present invention, further comprises a step of utilizing the at least one ROI in the record to determine and communicate at least a part of the plurality of structured information items and/or at least one record identifier to an interface, wherein said interface is connected to the at least one means for processing data.

In embodiments the step of determining at least one ROI in the record based on the determined at least one record identifier is statistically performed.

In embodiments the computer-implemented method for determining record information according to the present invention, further comprises a step of storing the at least one ROI in the at least one data resource.

In embodiments the at least one record identifier is linked to, but not limited to, merchant, product, company, retailer, vendor, user, party, originator and/or payer data or payment data.

A computer-program product for executing a computer-implemented method according to embodiments of the present invention.

According to a preferred embodiment of the invention, a classification for the record is based on the at least one ROI comprises an identification of the record as financial transaction and/or a determination of the author of the record.

Another aspect of the invention is to provide a use of the computer-implemented method and/or computer program product according to at least one of the aforementioned embodiments.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

Fig. 1 illustrates a system for determining record information of a data source, according to one or more embodiments of the present invention.
Fig. 2 illustrates a method for determining record information of a data source, according to one or more embodiments of the present invention.
Fig. 3 illustrates a method for determining record information of a data source, according to one or more embodiments of the present invention.
Fig. 4 illustrates a method for determining record information of a data source, according to one or more embodiments of the present invention.
Fig. 5 illustrates an example of a data source for determining record information of a data source, according to one or more embodiments of the present invention.
Fig. 6 illustrates an example of a data source for determining record information of a data source, according to one or more embodiments of the present invention.
Fig. 7 illustrates a block diagram that depicts a computer system upon which embodiments may be implemented.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to "data source", reference may be made to at least one file comprising printed data or electronic data. The data contained in a data source may be alphanumerical, graphical or a combination of alphanumerical and graphical data.

Where in embodiments of the present invention reference is made to "printed data file" or "printed data", reference may be made to at least one non-electronic means comprising at least one substance or material, for example but not limited to paper, metal, cardboard, and/or plastic, optimized for presenting printed graphical and/or text information arranged in a structured form. Printed data files may include, for example, receipts, advertising documents, odometer readings, travel itineraries, TRIPS agreements, or a combination thereof, but are not limited thereto.

Where in embodiments of the present invention reference is made to "electronic data" or "electronic data file", reference may be made to at least one electronic means for storing and presenting static electronic graphical and/or text information stored to be presented in a structured form. Electronic data files may include text messages (e.g. SMS, email), a web page, a text file, output from APIs generating files comprising structured data, unstructured data that may be converted into structured data, or a combination thereof, but not limited thereto.

Where in embodiments of the present invention reference is made to "record", reference may be made to a machine or computer readable format of a data source comprising a plurality of (un)structured information items. Records may be machine or computer readable formats of receipts, advertising documents, odometer readings, travel itineraries, TRIPS agreements, electronic text files, but are not limited thereto. Unstructured information items contained in a record, i.e. information items for which their location in the record is a priori undefined and/or not known for data processing machines or computers, may be converted into structured information items before being processed according to at least one embodiment of the present invention.

Where in embodiments of the present invention reference is made to "information items", reference may be made to data or data values provided on a data source or a record of the data source. According to preferred embodiments of the invention, information items may be alphanumerical, graphical or a combination of alphanumerical and graphical.

Where in embodiments of the present invention reference is made to "structured information items", reference may be made to information items structured or positioned in a two or more dimensional grid of cells defined by at least one row and/or at least one column of a record. Said grid may comprise homogeneous and/or non-homogeneous sub-grids.

Where in embodiments of the present invention reference is made to "record information", reference may be made to data contained in the record, also referred to as a plurality of structured information items, in which at least a part of the data values may be, preferably user-independently, linked to each other, wherein the "user" is defined as the owner of the record. Examples of user-independent information items on printed and/or electronic receipts are a merchant's name and its VAT number since these information items may be the same, or identical, from user to user owning a receipt of the same merchant, although each user may have purchased different items. Determining record information according to preferred embodiments of the invention may allow to determine, for example, additional merchant information from an invoice which is not stored in a data resource, for example a database, being part of the means for processing data according to the present invention, or to determine information items which may not be linked to the merchant, like date of transaction, sales price and/or type of payment. These information items contained in the record may help to determine a classification of a record.

Where in embodiments of the present invention reference is made to "data resource" or "database", reference may be made to a collection of organized data comprising at least one feed.

Where in embodiments of the present invention reference is made to "at least one feed", reference may be made to data comprising primary items which may be linked to secondary items or secondary attributes, wherein the secondary items may define each one of the primary items in a unique way.

Where in embodiments of the present invention reference is made to "means for processing data", reference may be made to one or more processors configured to perform operations according to embodiments of the invention.

Where in embodiments of the present invention reference is made to "region of interest" (ROI), reference may be made to at least one area on a record comprising information items (data values) which may be linked to at least one other information item on the record.

In a preferred embodiment of the invention, a primary item may be but is not limited to attributes such merchant, company, retailer, vendor, user, party, originator and/or payer. A secondary item is linked to a primary item and may define the primary item in a unique way. In a preferred embodiment of the invention, a secondary item may be but is not limited to attributes such as street, postal code, country, street number, IBAN number, company number or address.

Embodiments described herein include a system and method for processing printed and/or electronic data sources, for example receipts but not limited thereto, originating directly, i.e. when data is provided by a user or guest to the system by means of digitizing and/or uploading, or indirectly, i.e. when data is provided by an (external) interface connecting to the system from a human- or machine-user. By "guest" we intend to refer to an undefined user, i.e. a user of the method and/or computer program product according to at least one embodiment of the invention, without identifying him, her or it (for example for interfaces). In particular, embodiments described herein enable users or guests to determine record information, for example the maker or author of a file, which may help to perform a classification of the record. With "classification" of the record, reference may be made to a determination of the maker, author or originator of the record or data source, allowing to classify the record per originator or author. For example, the merchant of a receipt or the parties that signed a TRIPS agreement may be labelled as authors and/or originators of the record or data source. According to an embodiment of the invention, the record information of the maker or author of a file, may also support to determine record information which may be linked to the aforementioned user. Indeed, embodiments described herein may be implemented in the context of a system that links financial information of a user, for example information recorded on bank statements, to "record" information contained in a receipt. In a financial or data aggregation context, embodiments enable users to perform activities such as uploading receipts or odometer readings, and then having information from the uploaded item analyzed and aggregated.

In one embodiment of the invention, a system is provided in which a record comprising a plurality of structured information items is received by the system, and wherein the record corresponds to a digitized version (for example a scan or image) of a data source that the user possesses in physical form. For example, an image may be captured from a receipt, odometer, or printed travel itinerary. According to a preferred embodiment of the invention, the record and the information items are stored in a data resource, for example a database.

According to one or more embodiments, records are obtained from one or more network devices having data source capture and/or transfer capabilities. Such devices may comprise mobile phones, tablet computers or other devices that include camera and/or image capturing functionalities, for example, means for QR-code scanning.

In an embodiment of the present invention, a record is processed by a computing device in order to determine record information, like for example the merchant printed on a receipt or the parties printed on a TRIPS agreement, and/or to classify the record, for example as a receipt. User-independent information contained in the record, for example the name of the merchant and/or his/her VAT number printed on the receipt, may be separated from user-dependent information, for example payment method, using at least one determined ROIs according to at least one embodiment of the invention. The determined at least one ROI may be user-independent. In other words, the identification of a user of the invention according to at least one embodiment may not be needed.

One or more embodiments described herein provide that methods, techniques and actions performed by a computing device are performed programmatically, or as a computer-implemented method. Programmatically means through the use of code, or computer-executable instructions. A programmatically performed step may or may not be automatic.

One or more embodiments described herein may be implemented using programmatic modules or components. A programmatic module or component may include a program, a subroutine, a portion of a program, or a software component or a hardware component capable of performing one or more stated tasks or functions. As used herein a module or component can exist on a hardware component independently of other modules or components. Alternatively, a module or component can be a shared element or process of other modules, programs or machines.

Furthermore, one or more embodiments described herein may be implemented through the use of instructions that are executable by one or more processors. These instructions may be carried on a computer-readable medium. Machines shown or described with figures below provide examples of processing resources and computer-readable mediums on which instructions for implementing embodiments of the invention can be carried and/or executed.

In particular, the numerous machines shown with embodiments of the invention include processor(s) and various forms of memory for holding data and instructions. Examples of computer-readable mediums include permanent memory storage devices, such as hard drives on personal computers or servers. Other examples of computer storage mediums include portable storage units, such as CD or DVD units, flash memory (such as carried on many cell phones and personal digital assistants (PDAs)), and magnetic memory. Computers, terminals, network enabled devices (e.g. mobile devices such as cell phones) are all examples of machines and devices that utilize processors, memory, and instructions stored on computer-readable mediums. Additionally, embodiments may be implemented in the form of computer-programs, or a computer usable carrier medium capable of carrying such a program.

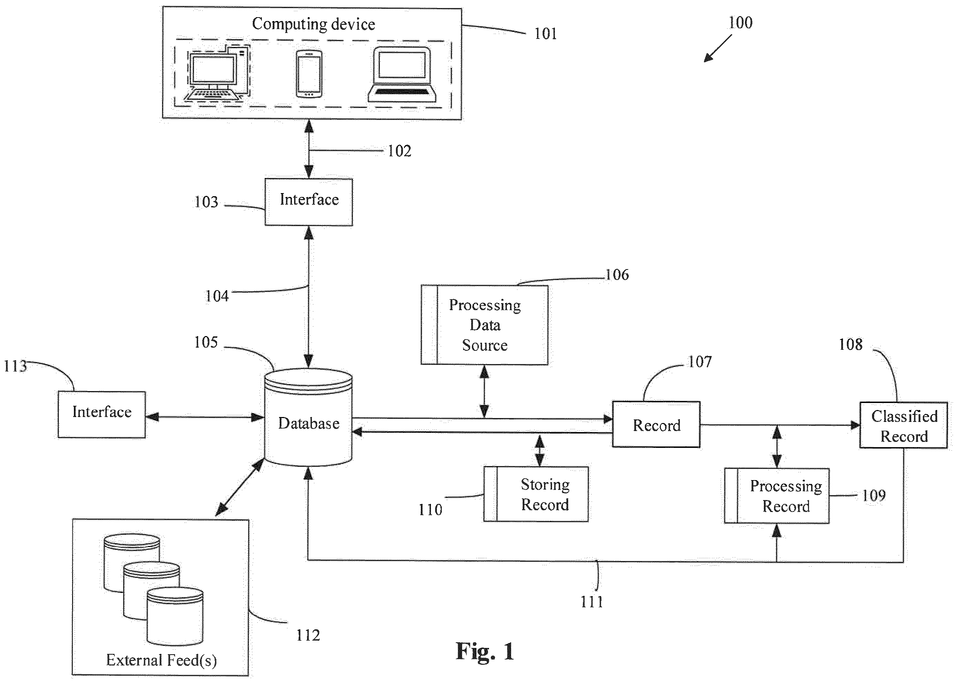

Fig. 1 illustrates a system for processing records comprising structured information items, according to one or more embodiments of the invention. In particular, Fig. 1 illustrates a system for determining record information according to one or more embodiments of the invention. A system such as described in Fig. 1 may be implemented in various computing environments. According to a preferred embodiment of the invention, at least a part of the system 100 is provided as an online service, supported by a server or combination of servers. More specifically, a system such as described by Fig. 1 is generally implemented under a secure computing environment, to protect personal information, such as financial information, of its users. In some embodiments, users of the service may interact with the service using a web browser (e.g. thin or non-client), or through a designated client application. Numerous different types of computing devices operated by users are enabled by embodiments described herein. In other implementations, alternative computing environments (e.g. client-centric) may be used to implement embodiments described herein.

According to some embodiments, records 107 can be created to represent one or more data sources (e.g. printed receipts, electronic invoice) from a user, and may then be stored in a database 105 or RAM. The database 105 (or data stored therein) or RAM may be accessible to one or more programmatic sources that can analyze or otherwise process records 107. According to an embodiment of the invention, programmatic sources may include interfaces to a human workforce that can process the records in bulk to determine select information items.

More specifically, in some embodiments, the system 100 includes components for determining record information, like for example the merchant printed on a receipt or the parties printed on a TRIPS agreement, and/or for classifying the record, for example as a receipt, and/or for linking financial information of the record to an account of the user, and/or for reconciling the record with information contained in processed record completed with user-dependent information.

According to at least one embodiment of the invention, the system **100** is capable of processing at least one printed data source and/or at least one electronic data source from a user or a guest. Examples of printed data sources are printed receipts or TRIPS agreements, but are not limited thereto. Examples of at least one electronic data sources are text messages, electronic receipts, or electronic files originating from an interface and forwarded by a user, but are not limited thereto. The printed data source may include a low quality image which can be digitized using means for digitizing printed data sources such as for example scanners, camera phones, tablets or other portable devices. While such devices carry functionality such as auto-focus, which makes image capture of, for example documents, possible, the images can be difficult to programmatically decipher, as the environment and media of the record are relatively uncontrolled. For example, a user may capture an image of a receipt in bad lightning, or with over-lightning. Furthermore, the receipt can be wrinkled or off-center. Embodiments recognize that such variability in the images can yield to poor results from performance of services like optical character recognition (OCR).

According to an embodiment of the invention, when a user applies means for digitizing printed data sources, like e.g. an OCR may be applied to identify data fields, i.e. the location of information items on a record **107.** A classification of the record **107** can be determined based on the set of information items. A user may also provide electronic data source comprising already information on the location of information items to the computing device.

In certain embodiments, the digitized printed data source obtained by means for digitizing may be a lossless or lossy raster formatted image such as for example a JPEG, PNG or GIF. In another embodiments, the digitized printed data source may be in a vector format such as for example a PDF, SVG, PostScript or Adobe illustrator, but are not limited thereto. The digitized printed data source may be of any standardized format.

It is also contemplated that multiple data sources may be included in a single record. In such cases, when the record is processed and analyzed by at least one means for processing, each data source included in the record **107** may be processed and analyzed separately.

According to at least one embodiment of the invention, the system **100** includes an interface **103** to communicate with at least one computing device **101** that may comprise a user, subscriber or guest base for service(s) provided to system **100.** The interface **103** can correspond to, for example, at least one webpage or a website that maintains accounts for individual users of the system **100.** The user may login to the at least one webpage or website and submit information, such as electronic data sources (e.g. receipts or contracts in PDF format), and view information, such as expense reports. The interface may also be (part of) an application locally stored on the computing device **101** and fed with information or data stored on at least one means for data storage, preferably a database **105.** According to at least one embodiment of the invention, computing devices **101** communicate with the system **100** through the interface **103** to provide digitized formats of printed data sources, for example printed receipts. Means for digitizing may be scanners, cameras or other means for converting printed data into raster or vector format. The digitized data sources, or images, may be received and associated with the user or guest account. The exchange of information or data **104** between the means for storing data **105** and the interface **103** may be performed.

The system **100** includes means for processing data sources which executing at least one step **106** to convert data sources into records **107.** A record **107** comprises a plurality of structured record information items. During step 106, the means for processing data sources may parse through the file and determine the location of each record information item. As an example, a given user or guest may capture an image of a printed receipt, for example by taking a photo of the printed receipts with his/her mobile phone or computing device, and submit **104** the digitized to the system to store it in the database **105.** The digitized data source may be processed in step **106** using, for example, one or more optical data recognition (OCR) processes. The outcome of this step **106** may be a record for which the location [start and end location] of the record information items is determined. The record information items are structured or positioned in a two (or more) dimensional grid of cells defined by at least one row and/or at least one column of the record. Data values of the data source for which no information of their location could be derived, may be ignored for further processing but will be stored for future processing.

According to at least one embodiment of the invention, records **107** may be stored in the database **105** for further processing by a step **110,** in which the record **107** may be linked to the user or guest of the computing devices **101.** The processing of the record **109** in order to determine record information requires the execution of several steps, explained below and referring to other drawings in this application. In particular, during the execution of these steps, data or information may be exchanged **111** with the database **105.** The data sources, comprising either printed or electronic data, that are conveyed from the interface **103** through the step of processing data source **106** and processing record **109,** may be classified **108** and stored in the database **105.**

According to preferred embodiments of the invention, the database **105** comprises a collection of organized data comprising at least one (external) feed **112,** wherein the at least one feed comprises primary items which may be linked to secondary items or secondary attributes, wherein the secondary items may define each one of the primary items in a unique way. For example, a primary item may be but is not limited to attributes such merchant, company, retailer, vendor, user, party, originator and/or payer. A secondary item is linked to a primary item and may define the primary item in a unique way. In a preferred embodiment of the invention, a secondary item may be but is not limited to attributes such as street, postal code, country, street number, IBAN number, company number or address.

According to at least one embodiment of the invention, the determined record information items and/or classified records **108** may be shared with other interfaces **113** than interfaces **103** as described before. In particular, at least one determined record information item may be provided to applications for further processing.

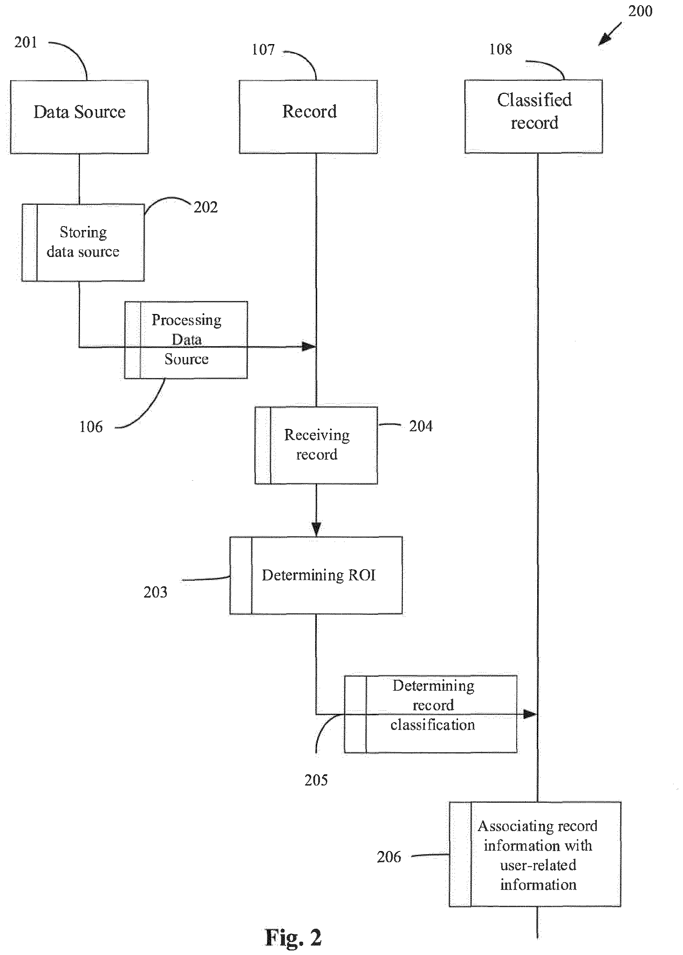

Referring to **Fig. 2****,** a method for determining record information according to a preferred embodiment of the invention is illustrated. A method such as described by Fig. **2** can be implemented using a system **100** such as described by an embodiment of Fig. **1****.** Reference to components or elements described within the context of other figures is provided for purpose of illustrating a suitable component for performing a step or sub step being described. According to a preferred embodiment of the invention, a data source **201** conveyed through the interface **103** may be stored in the database **105.** The data source **201** may comprise printed data, like for example printed receipts, or odometer readings, provided by a user or guest of the system **100, 200.** Prior to storing printed data (files) from a user, the user may digitize its data source using means for digitizing and/or processing **101,** like for example cameras or scanners. The data source may also comprise electronic data, like for example electronic receipts received by email exchange between a user and a merchant, or PDF formatted files. Images of printed data files, as well as electronic data files may be uploaded via the interface **103** and stored **202** in the database **105.** Stored data sources may further be processed, using means for processing data, applying a step for processing data sources **106** comprising at least one step for determining the position or location of record information items, preferably using at least one ROI process. The received record **107** comprises a plurality of structured information items, wherein each information item comprises e.g. at least one alphanumerical character. The record processing step **109** may be executed by means for processing data comprised within the system **100,** and comprises a step for determining at least one Region Of Interest (ROI) in the record based on at least one predetermined ROI comprising at least one record identifier utilizing at least a part of the plurality of structured information items and at least one means for data storage, preferable a database **105,** comprising at least one data feed **112.** The ROI comprises record information items that may directly be linked to each other, which have a limited change to vary from record to record in terms of value, and which may support the classification of the record **107.** For example, an ROI on a printed receipt may be determined by the location of data values that may directly be linked to the merchant, like the name of the store, the location of the store (i.e. street, street number, postal code, city, country, VAT number, phone number). Information items like common purchased items, total amount, date of transaction, or method of payment, are information items on a record **107** that may, and certainly will, vary from receipt to receipt and/or from user to user, and these data values are not considered as information items that may directly be linked to each other. When reference is made to "common purchased items", reference may be made to data values like "water", "soda" or "item", i.e. information items which may not uniquely be linked to one merchant or author of a receipt. The determination of an ROI, as it contains at least one record identifier, may help to efficiently distinguish between information items on the record **107** that may be linked to the maker of the record and information items that may be linked to the user or owner of the record / data source. Hence, determining an ROI **203** in the record **107** may support the determination of a classification **205** for the record **107.**

According to a preferred embodiment of the invention, the classified record **108** may be stored in the database **105** and/or used to associate record information with user-related information, like for example a financial account of the user. According to another preferred embodiment of the invention the determined ROI may be stored in the database **105** such to use said determined ROI as a predetermined ROI in a next classification enable an even more efficient classification the next time, provide an intelligent processing of a record which is enhanced each time a record is processed.

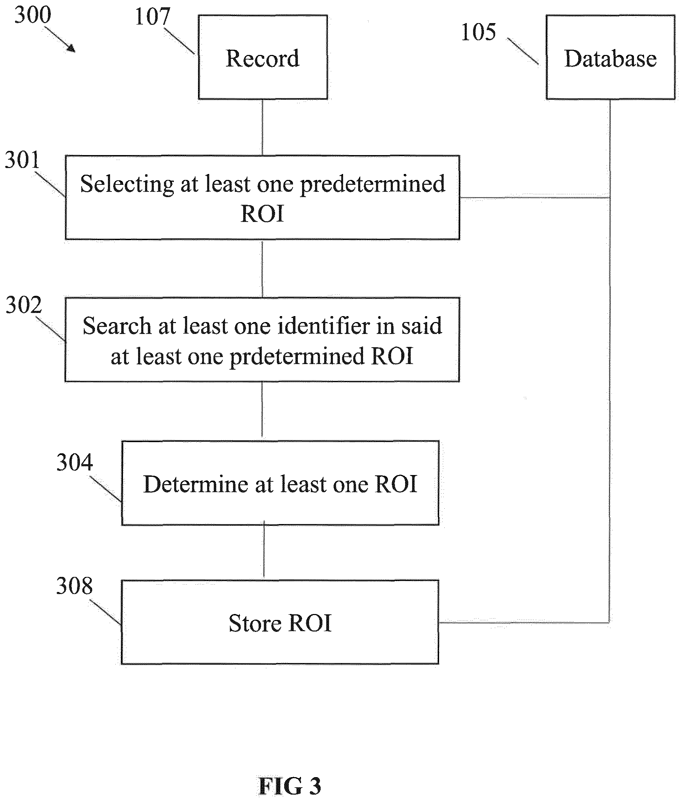

Referring to **Fig. 3** and according to a preferred embodiment of the invention to determine record information, there is depicted a flowchart indicating a particular process **300** to determine the at least one ROI in the record **107** using at least a part of the plurality of structured information items and a data resource, preferably a database **105,** comprising at least one data feed **112** (not shown). Reference to components or elements described within the context of other figures is provided for purpose of illustrating a suitable component for performing a step or sub step being described. The process **300** comprises a step **301** for selecting at least one predetermined ROI stored in the database **105.** The predetermined preliminary ROI may be a stored ROI (from a previously classified record) if the record classification is known or a user-defined ROI. In some embodiments a system based ROI may also be used as predetermined preliminary ROI. In an example an at least one predetermined ROI may be the first 10 lines of the record and/or the last 5 lines. In another example the at least one predetermined ROI may be selected based on an index or value attributed to the record. Once the at least one predetermined preliminary ROI is selected, a step **302** for identifying or searching at least one record identifier in said at least one predetermined preliminary ROI is performed, wherein the at least one record identifier may be a unique first identifier. Searching at least one record identifier may comprise comparing the at least one structured information items in a first predetermined preliminary ROI and at least one data resource item and based on said comparison determine if at least one structured information is a record identifier and if no record identifier is found in the first predetermined preliminary ROI, compare the at least one structured information item in a second or consecutive selected predetermined preliminary ROI until at least one record identifier is found.

The at least one identifier from the data resource, preferable database **105,** may comprise at least one data resource item, which may be a primary item, a secondary item or a combination thereof. In an example two secondary items are used, like a street name and number. The at least one data resource item can be a plurality of data resource items, primary or secondary, which can be dependent or independent of each other.

These steps may be executed by means for processing data, for example, during step **109** for processing the record **107.** A predetermined preliminary ROI may be selected without analyzing the at least part of the structured information items contained in the record. An example of a preliminary predetermined ROI may be arbitrary like e.g. the first 10 (ten) lines of a record, whereas the determined ROI can be the first five lines of a record comprising at least one identifier like e.g. a VAT number which is one item or a street name and number which are two items, which can be dependent or independent of each other. However, a further use of the system according to at least one embodiment of the invention may result in a smaller predetermined preliminary ROI depending on the amount of files analyzed by the method. For example, the predefined ROI may be lowered from the first 10 (ten) lines to the first 5 (five) lines. As a result, the present method enables smart processing of the record by storing the determined ROI and enable an even faster determination in next future processing steps.

According to at least one embodiment of the invention, for executing step **301,** the at least one predetermined preliminary ROI is selected from the group consisting of, but not limited to, a user-defined preliminary ROI, a record-based preliminary ROI (e.g. from a previous processing step), a random-based preliminary ROI, or a system-based preliminary ROI which may be provided by the database **105** to the means for processing the steps **300.** Said information may be stored in the database for a specific type of record, wherein information on the type of record (record classification) may be determined during at least one previous process. Information for determining a predetermined preliminary ROI may be provided by the user who or which provided the data source **201** converted into the record **107** to the system **100** via the interface **103.** Information for determining a predetermined preliminary ROI may be defined independently from the record, for example, the first five (5) rows of the record or the first ten (10) % of the rows of the record.

According to at least one embodiment of the invention, for executing step **301,** means for processing data may parse through the predetermined preliminary ROIs and store the data value of at least one information item on means for data storage, preferably the database **105.**

According to at least one embodiment of the invention, for executing step **302,** said data value of said at least one information item is used to select at least one identifier. The data value of the selected at least one identifier is identical to the data value of the at least one information item selected from the predetermined preliminary ROI.

According to at least one embodiment of the invention, selecting at least one predetermined ROI may comprise parsing through the predetermined preliminary ROIs. Searching at least one identifier may comprise parsing through the predetermined ROI and comparing the data items in said predetermined ROI to information items in the database. An identifier may be found when an information item of the predetermined ROI matches, e.g. which are identical, to at least one selected primary or secondary item. Said at least one identifier may be a first or secondary information item. Besides data values, each secondary item comprises information on the description of the data value, i.e. data type. For example, the data value of a secondary item may be "Belgium" and the description linked to this secondary item may be "Merchant country". In case there is a match in data value between an information item in the predetermined preliminary ROI and a secondary item, the position of this information item is preferably stored [in memory] and a following secondary item may be selected to parse through the predetermined preliminary ROI.

In order to determine the at least one ROI, a correlation factor may be computed to enable a machine or automatic decision on the quality of the predetermined preliminary ROI. In particular, the correlation factor may depend on the data type of the secondary item enabling at least one identifier, in case this secondary item matches with an information item of the predetermined preliminary ROI. Given the fact that the chance for a match in data values between an information item of the predetermined preliminary ROI and e.g. a secondary item may be higher for numbers, like for example street number, than for words, like for example country or street name, a higher weight may be appointed to a match between, for example, strings potentially representing a country than to integers potentially representing a street number.

According to at least one embodiment of the invention, once the search, and eventually the identification of "matching" information items in the predetermined preliminary ROI, has been performed using at least one of the selected information item, e.g. secondary items, a statistically weighted correlation factor may be computed in order to decide if the predetermined preliminary ROI may be stored as an ROI of the record, or if the predetermined preliminary ROI may be re-defined or another predetermined preliminary ROI is selected and the steps **301, 302** and **304** may be executed again, or if the system may select another record for processing, depending on a pre-defined threshold value.

According to at least one embodiment of the invention, during step **308,** the record **107** may be classified and stored in the database **105.** Information items located in the determined at least one ROI, for example but not limited to identifiers, may be extracted from the record **107** and stored in the database or linked to information from the user or guest. Since the determined at least one ROI may comprise at least one identifier, e.g. information items directly linked to, for example, a merchant, information items not contained in the determined ROI may be linked to the user or guest, i.e. the (temporally) owner of the data source linked to the record **107.**

In embodiments at least one identifier is selected from the group consisting of a unique identifier or at least two identifiers, wherein the unique identifier corresponds with a unique primary item of the data resource, and wherein a first identifier of the at least two identifiers corresponds with at least one primary item and a second identifier corresponds with at least one secondary item, wherein said at least one secondary item uniquely defines said at least one primary item.

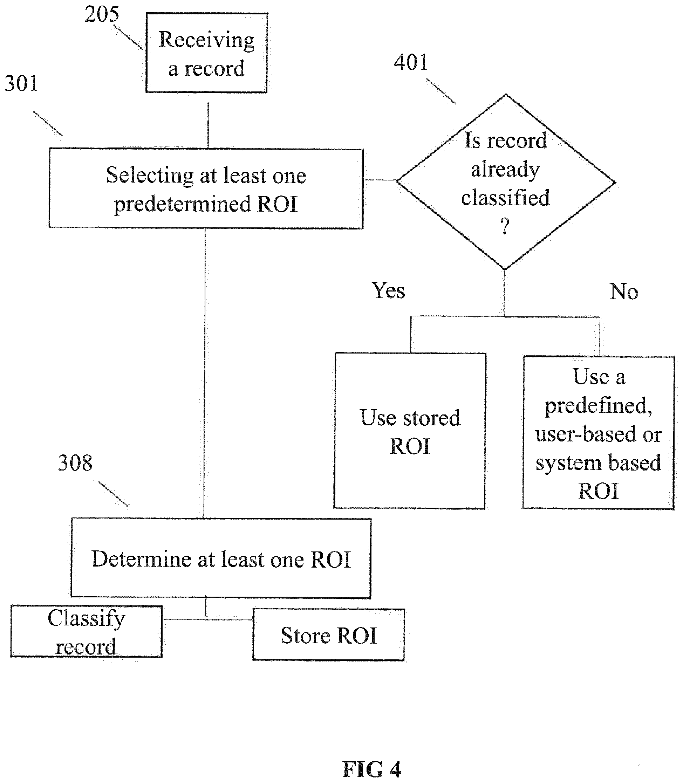

Referring to **Fig. 4****,** there is depicted, according to a preferred embodiment of the invention, a flow. Reference to components or elements described within the context of other figures is provided for purpose of illustrating a suitable component for performing a step or sub step being described. When a record **107** is received **204,** a predetermined preliminary ROI may be selected **301.** If the record **107** had already been classified during at least one process performed before, the obtained ROI there may be stored resulting in a predetermined ROI for that specific type of record which may be used to determine an ROI in a next record. If the record **107** has not been classified before, a user-defined or system-based predetermined ROI may be used to determine a ROI.

### EXAMPLE

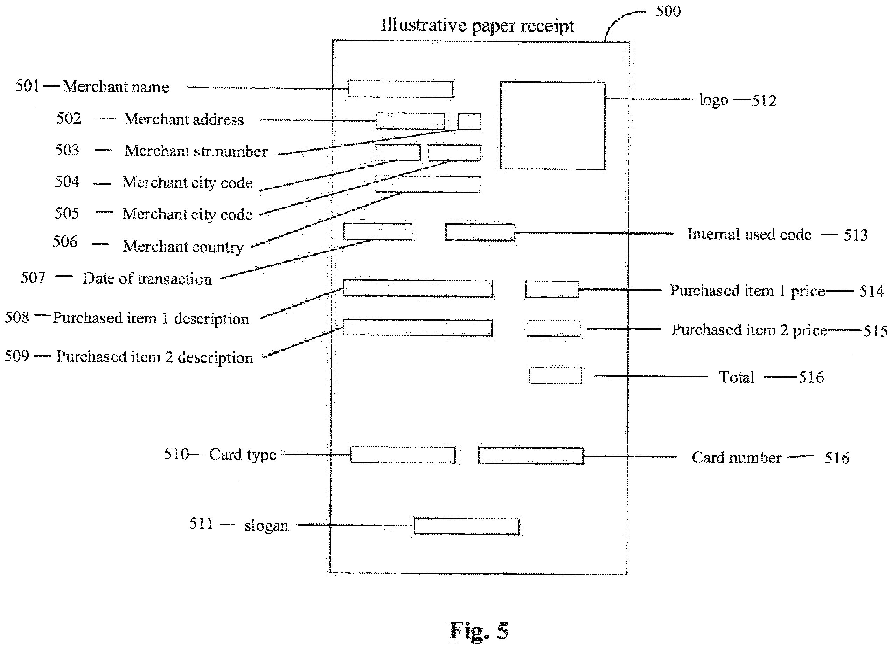

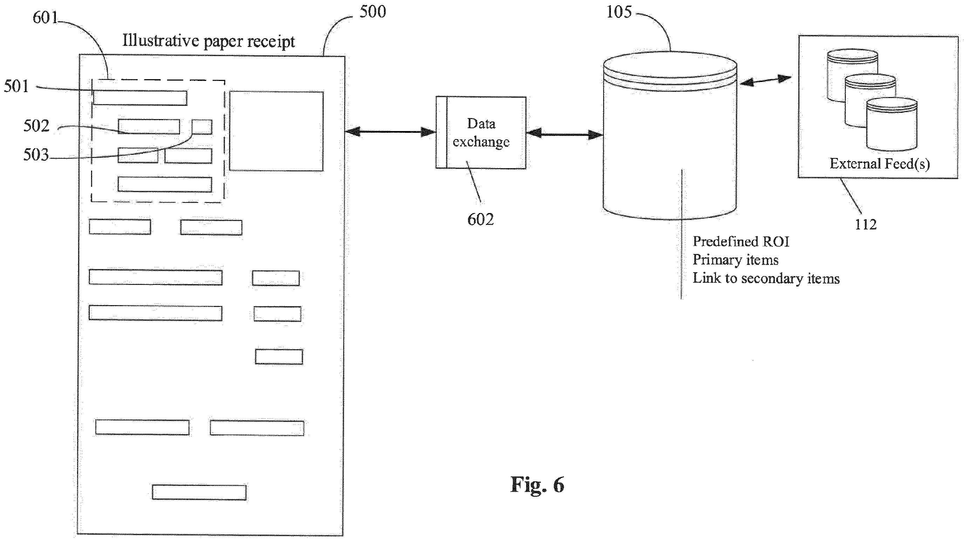

Referring to **Fig. 5** and **Fig. 6****,** there is depicted an illustration of a paper receipt **500** of a user or guest of the system **100.** The illustrative paper receipt is a random receipt which may not be confused with a template, hence, the location of the numerical, alphanumerical and/or graphical data may be different. The paper receipt **500** comprises information from the maker or originator of the receipt, for example, the merchant. In particular, the merchant may be identified by the user's common sense on the basis of the merchant name **501,** merchant address **502,** merchant street number **503,** merchant city code **504,** merchant city **505,** and/or merchant country **506.** The merchant also printed his/her logo **512** on the paper receipt **500.** The user or owner of the paper receipt **500** performed an action, for example a purchase of two items, purchased item 1 and purchased item 2. The description of the purchases item 1, **508,** and a description of the purchased item **2, 509,** are also printed on the paper receipt **500,** as well as the individual, **514, 515,** as total price **516.** The paper receipt comprises also the data of the transaction **507,** an internal used code **513,** the type of card that has been used to pay the items **510** and the card number **517.** Finally, a slogan **511,** for example "thank you", is also printed on the receipt.

According to a preferred embodiment of the invention, record information may be derived from the paper receipt **500** like, for example, the merchant. This information may help since the user or owner of the paper receipt **500** would like to link automatically the name of the merchant to his financial transactions without the requirement to identify these financial transactions first to the system. Therefore, the user may provide the printed data source to the system **100** using at least one computing device **101.** The interface **103** of the system may request **102** to take a photo or image of the paper receipt **500.** A digitized version of the paper receipt **500** may be stored in the database **105** and converted into a record **107** for further processing.

According to a preferred embodiment of the invention and during record processing **109,** a predetermined preliminary ROI **601** may be selected. Information to select and in some embodiments determine this predetermined preliminary ROI **601** (e.g. in case where the record is not classified providing a user-dependent or system defined ROI) may be stored in a database **105.** Referring to the example Fig. 6, the at least one predetermined preliminary ROI **601** comprises six (6) record information items (data values) that may be linked to the merchant. At least one record information item may be saved in memory or the database **105** and an identical data value may be searched in at least one or a series of identifiers, e.g. primary or secondary items stored in the database **105.** For example, means for processing may look an identical data value as the one listed under merchant name 501. Several primary items may be found in the database **105** because, for example, the merchant may have several stores across the world. The series of primary items is loaded in the database from at least one external feed **112.** Secondary items, for example street and street number may be determined as an identifier from the at least one external feed **112.** Items which uniquely identify the record, e.g. secondary items which may be uniquely linked to a primary item and thus uniquely identifying said primary item, are stored in memory or the database **105.** Means for processing the record **107** parse through the predetermined preliminary ROI to identify if there may be a match between a selected identifier, e.g. a secondary item, and an information item in said predetermined preliminary ROI. For example, the data value of street name **502** may be matched with one (1) selected secondary item. In order to determine the at least one ROI, a correlation factor may be computed to enable a machine or automatic decision on the quality of the predetermined preliminary ROI. In particular, the correlation factor may depend on the data type of the at least one identifier, e.g. secondary item in case this secondary item matches with an information item of the predetermined preliminary ROI. Given the fact that the chance for a match in data values between an information item of the predetermined preliminary ROI and at least one identifier, e.g. secondary item, may be higher for numbers, like for example street number, than for words, like for example country or street name, a higher weight may be appointed to a match between, for example, strings potentially representing a country than to integers potentially representing a street number.

### IMPLEMENTATION EXAMPLE

According to one embodiment of the invention, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, portable computer systems, handheld devices, networking devices or any other device that incorporates hard-wired and/or program logic to implement the techniques.

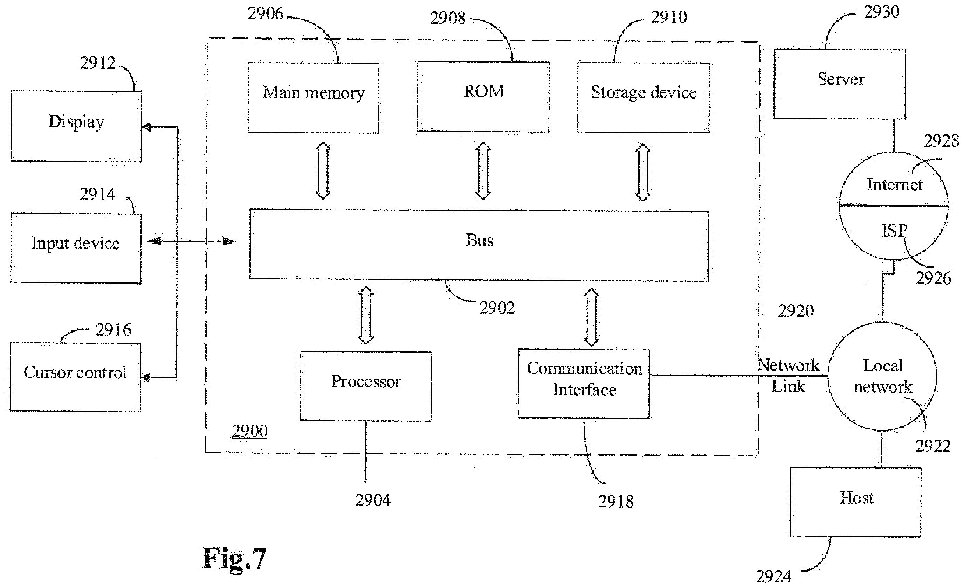

For example, **Fig. 7** is a block diagram that depicts a computer system **2900** upon which an embodiment may be implemented. Computer system **2900** includes a bus **2902** or other communication mechanism for communicating information, and a hardware processor **2904** coupled with bus **2902** for processing information. Hardware processor **2904** may be, for example, a general-purpose microprocessor. Computer system **2900** also includes a main memory **2906,** such as a random access memory (RAM) or other dynamic storage device, coupled to bus **2902** for storing information and instructions to be executed by processor **2904.** Main memory **2906** also may be used for storing temporary variables or other intermediate information during execution of instructions to be executed by processor **2904.** Such instructions, when stored in non-transitory storage media accessible to processor **2904,** convert computer system **2900** into a special-purpose machine that is customized to perform the operations specified in the instructions.

Computer system **2900** further includes a read only memory (ROM) **2908** or other static storage device coupled to bus **2902** for storing static information and instructions for processor **2904.** A storage device **2910,** such as a magnetic disk or optical disk, is provided and coupled to bus **2902** for storing information and instructions.

Computer system **2900** may be coupled via bus **2902** to a display **2912,** such as a cathode ray tube (CRT), for displaying information to a computer user. An input device **2914,** including alphanumeric and other keys, is coupled to bus **2902** for communicating information and command selections to processor **2904.** Another type of user input device is cursor control **2916,** such as a mouse, a trackball, or cursor direction keys for communicating direction information and command selections to processor **2904** and for controlling cursor movement on display **2912.** This input device typically has two degrees of freedom in two axes, a first axis (e.g., x) and a second axis (e.g., y), that allows the device to specify positions in a plane.

Computer system **2900** may implement the techniques described herein using customized hardwired logic, one or more ASICs or FPGAs, firmware and/or program logic which in combination with the computer system causes or programs computer system **2900** to be a special-purpose machine. According to one embodiment, the techniques herein are performed by computer system **2900** in response to processor **2904** executing one or more sequences of one or more instructions contained in main memory **2906.** Such instructions may be read into main memory **2906** from another storage medium, such as storage device **2910.** Execution of the sequences of instructions contained in main memory **2906** causes processor **2904** to perform the process steps described herein. In alternative embodiments, hard-wired circuitry may be used in place of or in combination with software instructions.

The term "storage media" as used herein refers to any non-transitory media that store data and/or instructions that cause a machine to operation in a specific fashion. Such storage media may comprise non-volatile media and/or volatile media. Non-volatile media includes, for example, optical or magnetic disks, such as storage device **2910.** Volatile media includes dynamic memory, such as main memory **2906.** Common forms of storage media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from but may be used in conjunction with transmission media. Transmission media participates in transferring information between storage media. For example, transmission media includes coaxial cables, copper wire and fiber optics, including the wires that comprise bus **2902.** Transmission media can also take the form of acoustic or light waves, such as those generated during radio-wave and infra-red data communications.

Various forms of media may be involved in carrying one or more sequences of one or more instructions to processor **2904** for execution. For example, the instructions may initially be carried on a magnetic disk or solid-state drive of a remote computer. The remote computer can load the instructions into its dynamic memory and send the instructions over a telephone line using a modem. A modem local to computer system **2900** can receive the data on the telephone line and use an infrared transmitter to convert the data to an infra-red signal. An infra-red detector can receive the data carried in the infra-red signal and appropriate circuitry can place the data on bus **2902.** Bus **2902** carries the data to main memory **2906,** from which processor **2904** retrieves and executes the instructions. The instructions received by main memory **2906** may optionally be stored on storage device **2910** either before or after execution by processor **2904.**

Computer system **2900** also includes a communication interface **2918** coupled to bus **2902.** Communication interface **2918** provides a two-way data communication coupling to a network link **2920** that is connected to a local network **2922.** For example, communication interface **2918** may be an integrated services digital network (ISDN) card, cable modem, satellite modem, or a modem to provide a data communication connection to a corresponding type of telephone line. As another example, communication interface **2918** may be a local area network (LAN) card to provide a data communication connection to a compatible LAN. Wireless links may also be implemented. In any such implementation, communication interface **2918** sends and receives electrical, electromagnetic or optical signals that carry digital data streams representing various types of information.

Network link **2920** typically provides data communication through one or more networks to other data devices. For example, network link **2920** may provide a connection through local network **2922** to a host computer **2924** or to data equipment operated by an Internet Service Provider (ISP) **2926.** ISP **2926** in turn provides data communication services through the world wide packet data communication network now commonly referred to as the "Internet" **2928.** Local network **2922** and Internet **2928** both use electrical, electromagnetic or optical signals that carry digital data streams. The signals through the various networks and the signals on network link **2920** and through communication interface **2918,** which carry the digital data to and from computer system **2900,** are example forms of transmission media.

Computer system **2900** can send messages and receive data, including program code, through the network(s), network link **2920** and communication interface **2918.** In the Internet example, a server **2930** might transmit a requested code for an application program through Internet **2928,** ISP **2926,** local network **2922** and communication interface **2918.**

The received code may be executed by processor **2904** as it is received, and/or stored in storage device **2910,** or other non-volatile storage for later execution.

In the foregoing specification, embodiments have been described with reference to numerous specific details that may vary from implementation to implementation. The specification and drawings are, accordingly, to be regarded in an illustrative rather than a restrictive sense. The sole and exclusive indicator of the embodiments, and what is intended by the applicants to be the scope of embodiments, is the literal and equivalent scope of the set of claims that issue from this application, in the specific form in which such claims issue, including any subsequent correction.

## Claims

1. A computer-implemented method (300) for determining record information, the method being implemented by at least one means for processing data (109) and at least one data resource (105), wherein the at least one data resource comprises at least one data resource item and at least one predetermined preliminary region of interest (ROI), comprising the steps of
- receiving a record by the at least one means for processing data (107), wherein the record comprises at least one structured information item;
- searching at least one record identifier in the at least one predetermined preliminary ROI of the record (302);
- determining at least one ROI in the record (304) based on the at least one predetermined preliminary ROI where the at least one record identifier is found;

2. The computer-implemented method (300) for determining record information according to claim 1, wherein searching the at least one record identifier in the at least one predetermined preliminary ROI of the record comprises
- comparing the at least one structured information item in a first predetermined preliminary ROI and at least one data resource item and based on said comparison determine if at least one structured information is a record identifier and
- if no record identifier is found in the first predetermined preliminary ROI, compare the at least one structured information item in a second or consecutive predetermined preliminary ROIs until at least one record identifier is found.

3. The computer-implemented method (300) for determining record information according to any of previous claims, wherein the at least one predetermined preliminary ROI is selected (401) from the group consisting of, but not limited to, a user-defined preliminary ROI, a record-based preliminary ROI, a random-based preliminary ROI, or a system-based preliminary ROI.

4. The computer-implemented method (300) for determining record information according to any of previous claims 1 to 3, wherein the at least one record identifier is a unique first record identifier which uniquely identifies a producer of the record, or an owner of the record or a classification of the record.

5. The computer-implemented method (300) for determining record information according to any one of previous claims, wherein the at least one record identifier comprises a first record identifier and at least one second record identifier, wherein the at least one second record identifier is uniquely assigned to the first record identifier.

6. The computer-implemented method (300) for determining record information according to any one of the claims 1 to 5, further comprising a step of determining at least one third record identifier assigned to the at least one second record identifier to perform a pre-processing step to determine the accuracy of the at least one structured information item in the record.

7. The computer-implemented method (300) for determining record information according to any one of the claims 1 to 6, further comprising a step of determining a classification for the record based on the determined at least one ROI.

8. The computer-implemented method (300) for determining record information according to any one of the claims 1 to 7, further comprising a step of utilizing the at least one ROI in the record to associate at least a part of the at least one structured information items with a resource of the producer of the record and/or the owner of the record.

9. The computer-implemented method (300) for determining record information according to any one of the claims 1 to 8, further comprising a step of utilizing the at least one ROI in the record to determine and communicate at least a part of the plurality of structured information items and/or at least one record identifier to an interface, wherein said interface is connected to the at least one means for processing data.

10. The computer-implemented method (300) for determining record information according to any one of the claims 1 to 9, wherein the step of searching at least one record identifier based on a comparison between the at least one structured information in the at least one predetermined preliminary ROI and the at least one data resource item, further includes the steps of
- selecting a first structured information item in the at least one predetermined preliminary ROI;
- determining at least one first record identifier based on the comparison between the first structured information item with the at least one data resource item, wherein the value of the
- at least one first record identifier corresponds with the value of the at least one data resource item;
- determining at least one second record identifier assigned to the at least one first record identifier if the first identifier is not unique;

11. The computer-implemented method (300) for determining record information according to any one of the claims 1 to 10, wherein step of determining at least one ROI in the record based on the determined at least one record identifier is statistically performed.

12. The computer-implemented method (300) for determining record information according to any one of the claims 1 to 11, further comprising a step of storing the at least one ROI in the at least one data resource.

13. The computer-implemented method (300) according to any one of the claims 1 to 12, wherein the at least one record identifier is linked to, but not limited to, merchant, product, company, retailer, vendor, user, party, originator and/or payer data or payment data.

14. The computer-implemented method (300) according to any of the claims 1 to 13, wherein the at least one identifier is selected from the group consisting of a unique identifier or at least two identifiers, wherein the unique identifier corresponds with a unique primary item of the data resource, and wherein a first identifier of the at least two identifiers corresponds with at least one primary item and a second identifier corresponds with at least one secondary item, wherein said at least one secondary item uniquely defines said at least one primary item.

15. A computer-program product for executing a computer-implemented method according to any one of the claims 1 to 14.
